# EUROPEAN PATENT SPECIFICATION

(11) **EP 2 495 942 B1**
(45) Date of publication and mention of the grant of the patent: **18.09.2013**
(21) Application number: 11157105.5
(22) Date of filing: 04.03.2011
(51) Int. Cl.: H04M 1/02

(54) **Slidable and rotatable portable electronic device for aligning the surfaces of the keypad and display portions**
Verschiebbare und drehbare tragbare elektronische Vorrichtung zur Ausrichtung der Oberflächen der Tastatur- und Anzeigeteile
Dispositif électronique portable coulissant et rotatif pour aligner les surfaces d'un clavier et des parties d'écran

(43) Date of publication of application: 05.09.2012
(73) Proprietor: BlackBerry Limited, Waterloo ON N2L 3W8 (CA)
(72) Inventor: Pegg, Albert, Waterloo Ontario N2L 3L3 (CA)
(74) Representative: Moore, Barry

(56) References cited:
- EP-A1- 2 031 839
- EP-A1- 2 120 425
- US-A1- 2006 128 449
- US-A1- 2009 075 702
- US-A1- 2010 273 531

## Description

Embodiments herein relate to portable electronic devices, and more particularly to slidable and rotatable portable electronic devices having a display portion and keypad portion movable between a closed position and an open position.

Electronic devices, including portable electronic devices, have gained widespread use and may provide a variety of functions including, for example, telephonic, electronic text messaging and other personal information manager (PIM) application functions. Portable electronic devices can include mobile stations such as simple cellular phones, smart phones, Personal Digital Assistants (PDAs), tablets and laptop computers.

Some handheld devices are touch-sensitive devices having a display, such as a liquid crystal display (LCD), with a touch-sensitive overlay. These touch sensitive devices may be useful, as handheld devices tend to be small and therefore limited in space available for user input and output devices. Further, these touch-sensitive devices allow a variety of input and output configurations, for example, because the screen content on the touch-sensitive devices may change depending on the functions and operations being performed.

US 2009/075702 describes an electronic device which includes at least two display casings each having a display therein, a connecting member comprising two rotation shafts arranged in parallel to each other and coupled to respective ones of the two display casings so as to allow each of the two display casings to rotate, and a sliding mechanism configured to allow the two display casings to move toward each other so as to allow the displays of the two display casings to form a single larger display area.

EP 2,120,425 relates to a portable terminal which has an upper body including an upper surface and a lower surface, a lower body having an upper surface. The upper body is slidably connected to the lower body for movement between a closed position and an open position to expose a portion of the upper surface of the lower body.

EP 2,031,839 describes a portable information terminal which has a first casing with operating buttons primarily mounted thereupon, and a second casing with primarily an output screen exposed. A sliding supporting member and casing turning supporting member are provided which realize a state wherein the first casing and second casing are overlapped, a state of mutually sliding, and a state wherein the first casing and second casing are turned to do away with any mutually overlapped portions.

US 2006/128449 describes a sliding module for a sliding-type portable terminal having a pair of sliding rail modules adapted to slide the sliding housing of the terminal along a curved path.

US 2010/273531 describes an electronic device which includes a first housing, a second housing and an aberration compensating chip. The first housing has a first display screen, and the second housing connected to the first housing has a second display screen, wherein the first display screen can be joined with the second display screen and a seam located at the joining place between the first display screen and the second display screen is formed. The aberration compensating chip disposed in the first housing or in the second housing is electrically connected to the first display screen and the second display screen. When the second housing moves relative to the first housing so as to simultaneously expose the first display screen and the second display screen for displaying images, the aberration compensating chip makes the seam trace between the first display screen and the second display screen invisible so as to display a complete image.

### GENERAL

Described herein are various portable electronic devices that may include a touch-sensitive display disposed on a first portion, a keypad disposed on a second portion, a third portion that couples the first and second portions together, and functional components such as a memory and a processor, specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

According to one aspect there may be provided a portable electronic device as detailed in claim 1.

According to another aspect, there may be provided a method as detailed in claim 15.

### BRIEF DESCRIPTION OF THE DRAWINGS

Embodiments of the present disclosure will now be described, by way of example only, with reference to the attached figures, wherein:

Figure 1 is a simplified block diagram of components of a portable electronic device;

Figure 2 is a front view of a portable electronic device according to one embodiment shown in a closed position;

Figure 3 is a front view of the portable electronic device of Figure 2 shown in an open position;

Figure 4 is a side view of the portable electronic device of Figure 2 shown in the closed position;

Figure 5 is a side view of the portable electronic device of Figure 2 shown in the open position;

Figure 6 is a top view of the portable electronic device of Figure 2 shown in the closed position;

Figure 7 is a top view of the portable electronic device of Figure 2 shown in the open position;

Figure 8 is a front view of a portable electronic device according to another embodiment shown in a closed position;

Figure 9 is a front view of the portable electronic device of Figure 8 shown in an open position;

Figure 10 is a top view of the portable electronic device of Figure 8 shown in the closed position; and

Figure 11 is a top view of the portable electronic device of Figure 8 shown in the open position.

### DETAILED DESCRIPTION

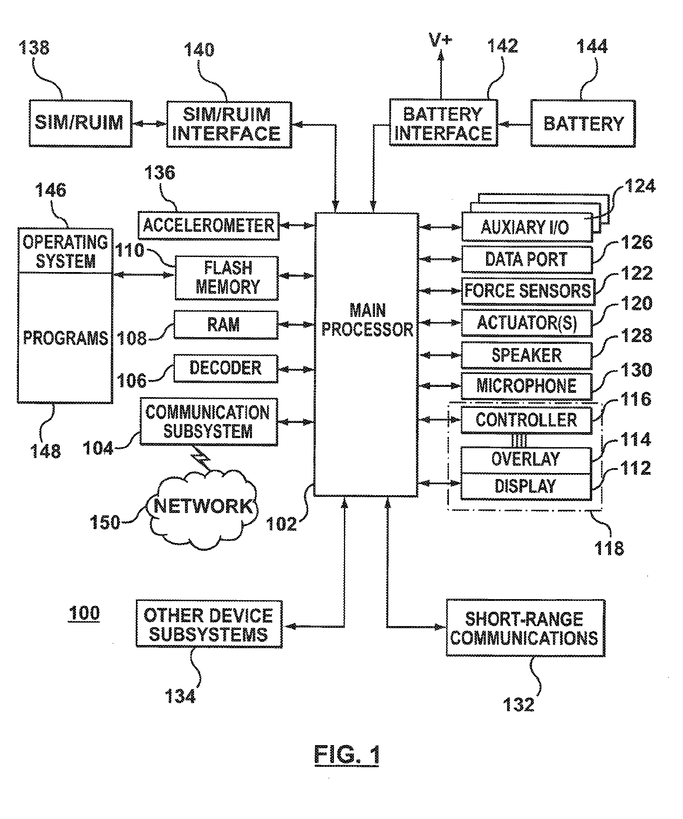

Figure 1 shows a simplified block diagram of components of a portable electronic device 100. The portable electronic device 100 includes multiple components such as a processor 102 that controls the operations of the portable electronic device 100. Communication functions, including data communications, voice communications, or both may be performed through a communication subsystem 104. Data received by the portable electronic device 100 may be decompressed and decrypted by a decoder 106. The communication subsystem 104 may receive messages from and send messages to a wireless network 150.

The wireless network 150 may be any type of wireless network, including, but not limited to, data-centric wireless networks, voice-centric wireless networks, and dual-mode networks that support both voice and data communications.

The portable electronic device 100 may be a battery-powered device and as shown includes a battery interface 142 for receiving one or more rechargeable batteries 144.

The processor 102 also interacts with additional subsystems such as a Random Access Memory (RAM) 108, a flash memory 110, a display 112 (e.g. with a touch-sensitive overlay 114 connected to an electronic controller 116 that together comprise a touch-sensitive display 118), an actuator assembly 120, one or more optional force sensors 122, an auxiliary input/output (I/O) subsystem 124, a data port 126, a speaker 128, a microphone 130, short-range communications systems 132 and other device subsystems 134.

In some embodiments, user-interaction with the graphical user interface may be performed through the touch-sensitive overlay 114. The processor 102 may interact with the touch-sensitive overlay 114 via the electronic controller 116. Information, such as text, characters, symbols, images, icons, and other items that may be displayed or rendered on a portable electronic device generated by the processor 102 may be displayed on the touch-sensitive display 118.

The processor 102 may also interact with an accelerometer 136 as shown in Figure 1. The accelerometer 136 may be utilized for detecting direction of gravitational forces or gravity-induced reaction forces.

To identify a subscriber for network access according to the present embodiment, the portable electronic device 100 may use a Subscriber Identity Module or a Removable User Identity Module (SIM/RUIM) card 138 inserted into a SIM/RUIM interface 140 for communication with a network (such as the wireless network 150). Alternatively, user identification information may be programmed into the flash memory 110 or performed using other techniques.

The portable electronic device 100 also includes an operating system 146 and software components 148 that are executed by the processor 102 and which may be stored in a persistent data storage device such as the flash memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, web page download, or other data may be processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104.

For voice communications, the overall operation of the portable electronic device 100 may be similar. The speaker 128 may output audible information converted from electrical signals, and the microphone 130 may convert audible information into electrical signals for processing.

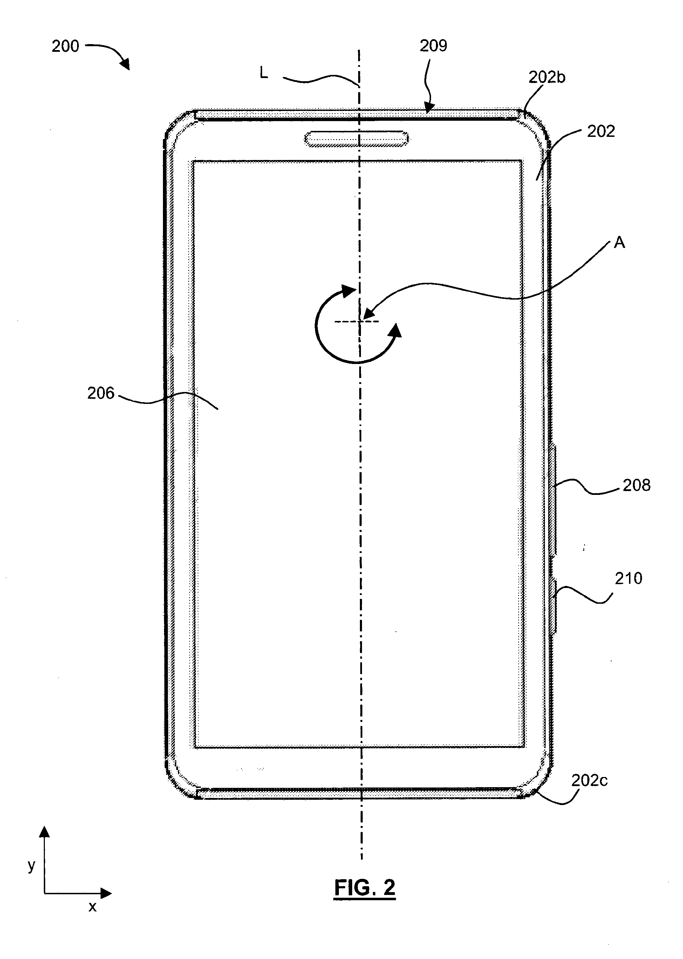

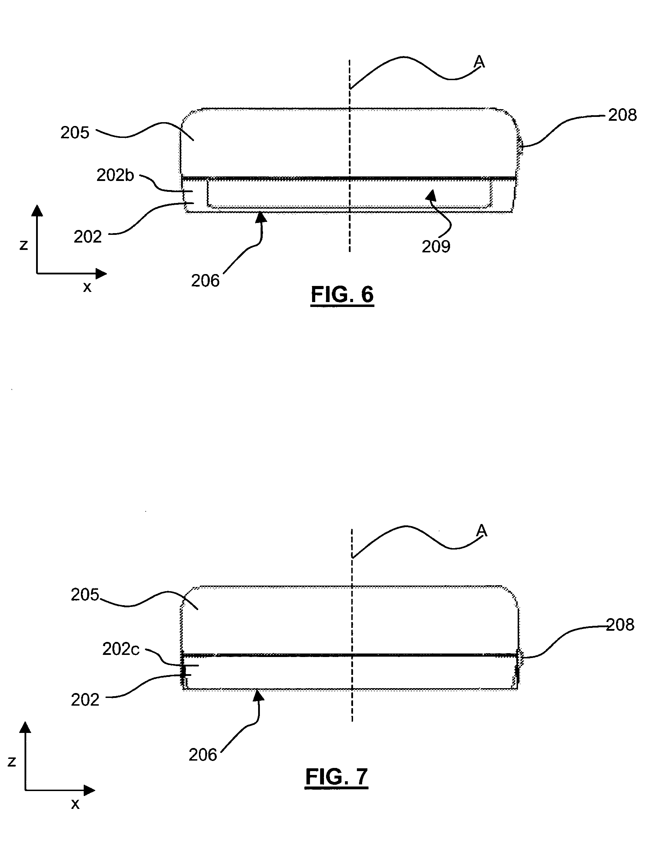

Turning now to Figures 2 to 7, illustrated therein is a portable electronic device 200 according to one embodiment. The portable electronic device 200 is a slidable and rotatable device and generally includes a first portion (shown here as a display portion 202), a second portion (shown here as a keypad portion 204), and a third portion (shown here as a slide portion 205) that is coupled to both the display portion 202 and keypad portion 204.

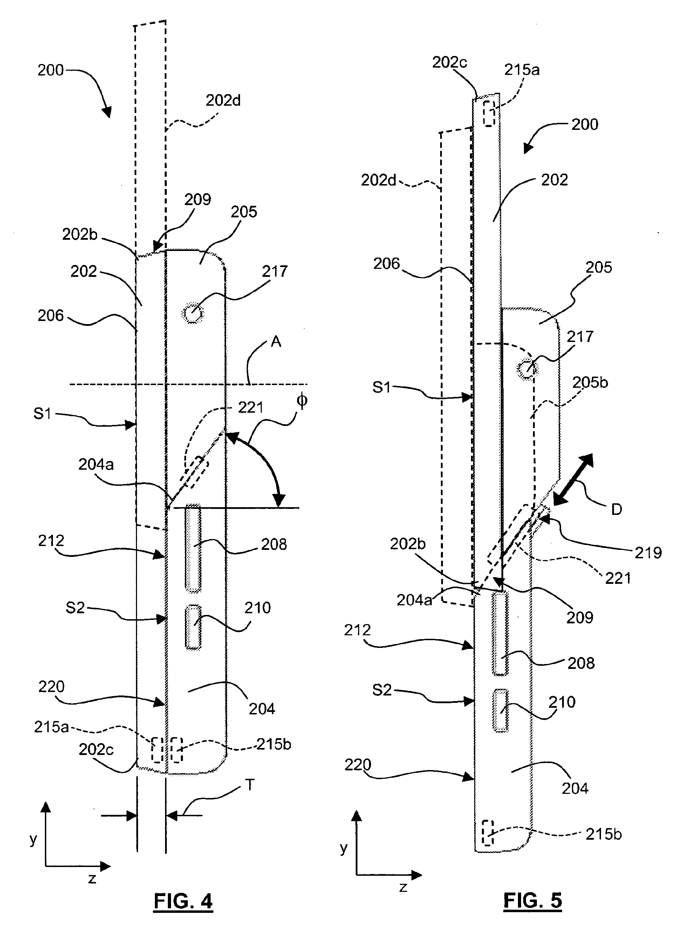

The display portion 202, keypad portion 204, and slide portion 205 are sized and shaped so that the display portion 202 can move between a "closed position" wherein the display portion 202 covers at least a portion of the keypad portion 204 (e.g. the display portion 202 covers a surface S2 of the keypad portion 204 as shown in Figure 4) and the first surface S1 and second surface S2 are offset from each other or misaligned, and an "open position" wherein the surface S2 of the keypad portion 204 is exposed and a surface S1 of the display portion 202 is aligned with the surface S2 of the keypad portion 204 (as shown in Figure 5).

In particular, the slide portion 205 and display portion 202 are rotatably coupled so that the display portion 202 may be rotated about a rotational axis A from the closed position (shown in Figure 2) to a rotated position (indicated generally as 202d in Figure 4). When the display portion 202 has moved to the rotated position, the surface S2 of the keypad portion 204 is at least partially exposed.

Furthermore, the slide portion 205 is slidably coupled to the keypad portion 204 so that when the display portion 202 is in the rotated position, the display portion 202 and slide portion 205 can slide in a slide direction D so that the surface S1 of the display portion 202 and the surface S2 of the keypad portion 204 can be aligned (as shown in Figure 5). In effect, the display portion 202 may be "dropped down" (e.g. along the z-direction) so that the two surfaces S1 and S2 align or are generally coplanar.

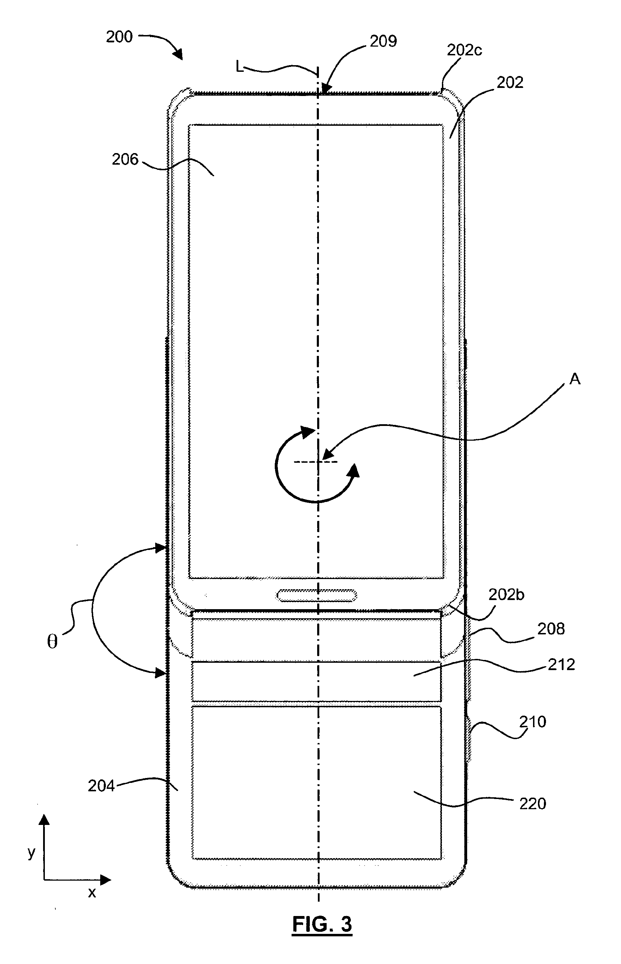

As shown in Figure 3, the display portion 202 has been rotated about the rotation axis A through a rotation angle θ. In this embodiment, the rotational axis A and the rotational angle θ are selected so that the display portion 202 is generally aligned with a longitudinal axis L of the portable electronic device 200 in both the closed position (shown in Figure 2) and the rotated position (shown in Figure 3). In particular, the rotational axis A in this embodiment is located on the longitudinal axis L, and the rotational angle θ is about 180 degrees.

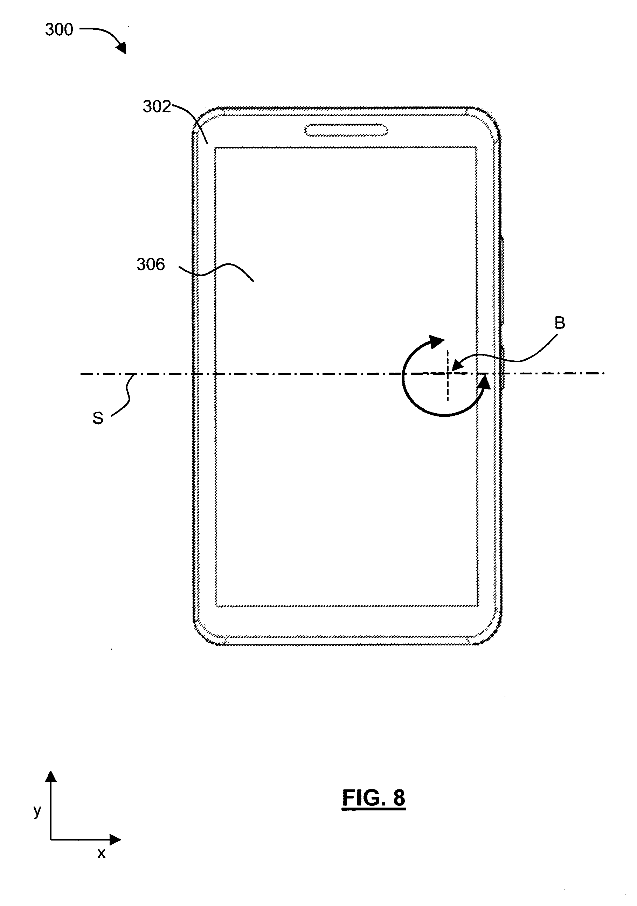

In other embodiments, the display portion 202 may be rotatably coupled to the slide portion 205 in other ways. For example, the rotational axis and the rotational angle may be selected so that the display portion 202 is generally aligned with a transverse axis S of the portable electronic device 200 in the rotated position (e.g. as shown in Figures 8 to 11 and described below).

The slide direction D has a component that extends in a direction that is normal to the surface S1 of the display portion 202 (e.g. along the z-axis). As shown, the slide direction D may be angularly offset from the z-direction by a slide angle φ (as shown in Figure 4), which as shown may be greater than zero. Accordingly, as the display portion 202 and slide portion 205 move in the slide direction D, the display portion 202 and slide portion 205 will move along both the z-axis by an amount proportional to the cosine of the slide angle φ, and along a direction aligned with the longitudinal axis of the device 200 (e.g. the y-axis) by an amount proportional to the sine of the slide angle φ.

Generally, the slide direction D can be described as having a component aligned with the longitudinal direction of the device 200 (e.g. the y-component) and another component aligned with a direction that is normal to the surface S1 of the display portion 202 (e.g. the z-component).

Selecting a slide angle φ greater than zero may allow for easier mechanical coupling between the display portion 202, the keypad portion 204, and the slide portion 205. Furthermore, when the slide angle φ is greater than zero, an upward force on the display portion 202 (e.g. a user's thumb or finger pushing on the display portion 202 towards a top end of the device 200) when the display portion 202 is in the rotated position 202d will tend to push the display portion 202 in the slide direction D. This may make it easier for a user to fully open the portable electronic device 200.

In some embodiments the slide angle φ may be between 15 degrees and 75 degrees. In some embodiments the slide angle φ may be between 30 degrees and 60 degrees. In some embodiments the slide angle φ may be approximately 45 degrees.

In other embodiments, the slide angle φ may be less than zero (e.g. the slide angle φ may be negative).

As shown in Figure 4, the display portion 202 has a thickness T. Accordingly, when moving the display portion 202 to the open position to align the first and second surfaces S1 and S2, the slide portion 205 moves along the z-direction by a distance approximately equal to T. This means that the slide portion 205 should be moved in the slide direction D by distance equal to the distance T divided by the cosine of the slide angle φ.

The display portion 202, keypad portion 204 and slide portion 205 may be coupled together using various techniques. For example, the keypad portion 202 and slide portion 205 may be rotatably coupled together so as to rotate about the rotation axis A. The position of the rotational axis A is selected so that when the display portion 202 is in the rotated position 202d, the surface S2 of the keypad portion 204 is exposed and the display portion 202 can be moved in the slide direction D into the open position. Furthermore, as shown, the rotational axis A may positioned along the longitudinal axis L of the device 200 so that the display portion 202 remains aligned with the keypad portion 204 in both the closed position and the rotated position.

The slide portion 205 and keypad portion 204 may be slidably coupled together using a slide mechanism 219, which may include interlocking slide rails for example. The slide mechanism 219 allows for relative movement between the slide portion 205 and the keypad portion 204 along the slide direction D so that the surfaces S1 and S2 of the display portion and keypad portion 204 can be aligned, but inhibits movement in other directions. In this embodiment, the slide mechanism 219 is inclined upwardly (from front to back of the device 200) so as to define the slide angle φ.

In some embodiments, the slide mechanisms 219 may have other configurations, for example, a tongue in groove arrangement that allows sliding movement between the keypad portion 204 and the slide portion 205.

In some embodiments, the slide mechanism 219 may include a biasing member (e.g. a linear spring, such as a compression or extension spring, or another biasing member). The biasing member may encourage the slide portion 205 and display portion 202 to move between one or more of the rotated position and the closed position. For example, a linear spring 221 in the slide mechanism 219 may be compressed when the portable electronic device 200 is in the closed position (see Figure 4) and extended when the portable electronic device 200 is in the open position (see Figure 5).

Similarly, a biasing member (e.g. a coiled spring) may be provided between the display portion 202 and the slide portion 205 to encourage the display portion 202 to move between one or more of the closed potion and the rotated position. For example, a coiled spring may be adapted to encourage rotation of the display portion 202 from the closed position to the rotated position.

In some embodiments, one or more locks or latches (e.g. mechanical locks, magnets, etc.) may be provided in one or more of the display portion 202, keypad portion 204 and slide portion 205 to help retain the portable electronic device in one or more of the closed position, the rotated position and the open position. For example, as shown in Figures 4 and 5, magnets 215a, 215b in the display portion 202 and the keypad portion 204 (respectively) may attract each other and help retain the device 200 in the closed position, but may not substantially interact with each other when the device 200 is in the open position.

When moving the display portion 202 from the closed position (shown in Figure 2) to the open position (shown in Figure 3), a user may rotate the display portion 202 around the rotation axis A so that the top end 202b and bottom end 202c of the display portion 202 are inverted. In some embodiments, this movement may be facilitated by a biasing member (e.g. a spring). Once the display portion 202 is in the rotated position 202d (e.g. so that the inverted top end 202b of the display portion 202 is clear of an edge of a corner 204a of the surface S2 of the keypad portion 204), the display portion 202 can then be moved in the slide direction D to align the surfaces S1 and S2.

In some embodiments, the movement in the slide direction D may be effected by the user pushing upwardly on the display portion 202 when in the rotated position 202d. In some embodiments, a biasing member (e.g. a spring) might at least partially assist moving the slide portion 205b along the slide direction D into the open position. Once in the open position, a locking mechanism (e.g. a latch or magnet) may help retain the portable electronic device 200 in the open position.

In some embodiments, the top end 202b of the display portion 202 may include a recessed portion 209 (shown in Figure 2) adapted to facilitate clearance of the display portion 202 past the corner 204a of the keypad portion 204 when the device 200 is in the rotated position 202d.

When the user wants to move the portable electronic device 200 back to the closed position (e.g. to close the portable electronic device 200), the user may press the back of the slide portion 205, moving the display portion 202 and slide portion 205 along the slide direction D back into the rotated position 202d. The user may then rotate the display portion 202 about the rotational axis A back to the closed position. In some embodiments, biasing member(s) (e.g. a springs) may help facilitate closing of the portable electronic device 200, and one or more locks may be used to help retain the portable electronic device 200 in the closed position.

In some embodiments, the first and second surfaces S1 and S2 are "active" surfaces in that they may include one or more input or output devices (or both), such as display screens, buttons, etc. For example, the first surface S1 might include the surface of a touch screen display 206. Similarly, the second surface S2 may include the surface of a keypad 220, other input devices 212, or another portion of the keypad portion 204.

Aligning the "active" surfaces S1 and S2 when the portable electronic device 200 is open may be beneficial. For example, user interaction with the portable electronic device 200 may be improved as a user may be able to transition from engaging the first surface S1 (e.g. touching a touch screen display 206 using a finger), to performing engaging the second surface S2 (e.g. the input devices 212 or keypad 220) generally without encountering discontinuities, such as a lip or stepped portion.

While the portable electronic device 200 has been described with respect to a touch screen display 206 and a keypad 220, the portable electronic device 200 may include other input and output devices, and may have other configurations as will be appreciated from the following description of some other exemplary input and output devices.

In some embodiments, the display 206 could be an LCD display with touch screen capabilities. For example, the display 206 could be the display 118 as generally described above. In some other embodiments, the display 206 may not be a touch screen display.

The portable electronic device 200 may include other input devices, such as navigation keys or buttons, a physical or virtual keyboard, a trackpad, a trackball, multimedia keys, etc. For example, in this embodiment the keypad portion 204 includes one or more input devices 212, which could include an optical navigation module (e.g. a trackpad), buttons, such as a phone application button, a home screen button, etc. In some embodiments, these input devices may include optical sensors, mechanical buttons, "soft keys", or various combinations thereof.

In some embodiments, the keypad portion 204 includes physical buttons 208 and 210 on a side of the keypad portion 204. In some embodiments, buttons 208, 210 could be used for navigation, volume control, or for other purposes. The portable electronic device 200 as shown also includes an audio jack 217 on the side of the slide portion 205, which may be used to couple the portable electronic device 200 to a speaker, a microphone, etc.

In some embodiments, the keypad 220 may include a plurality of alphanumeric keys for inputting data into and otherwise controlling the portable electronic device 200. In some embodiments, the keys may represent an alphabet and may be arranged with a standard keyboard layout (e.g. QWERTY, QWERTZ, DVORAK, etc.) or according to other particular patterns. In some embodiments, the keypad 220 could be a physical keypad 220 with mechanical keys. In other embodiments, the keypad 220 could be a touch screen with soft keys.

As shown in Figures 3 and 5, when the portable electronic device 200 is in the open position, the keypad 220 on the keypad portion 204 may be exposed for user access. As shown in Figures 2 and 4, when the portable electronic device 200 is in the closed position, the keypad 220 may be covered by the display portion 202. This may be beneficial as it may protect the keypad 220 when not in use, and may also inhibit keys from being pressed unintentionally when a user is carrying the portable electronic device 200 (e.g. in a pocket for example).

In some embodiments, the user may be able to perform functions on the portable electronic device 200 when the device 200 is closed, for example, by interacting with the accessible input devices (e.g. buttons 208, 210, the touch screen display 206, etc.). Then, when the device 200 is open, functions can be performed using other input devices, such as the input devices 212 and keypad 220.

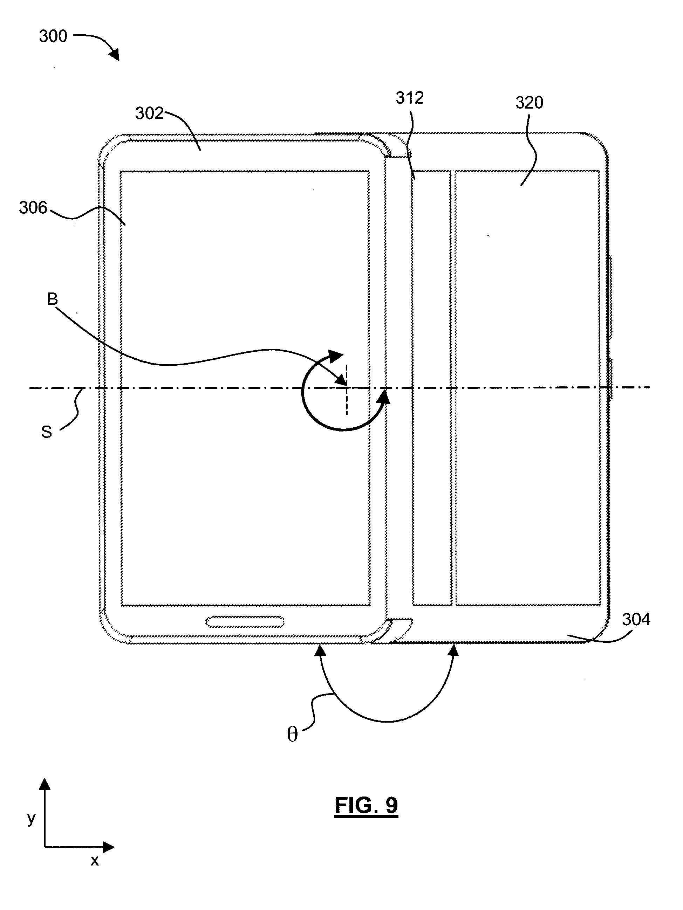

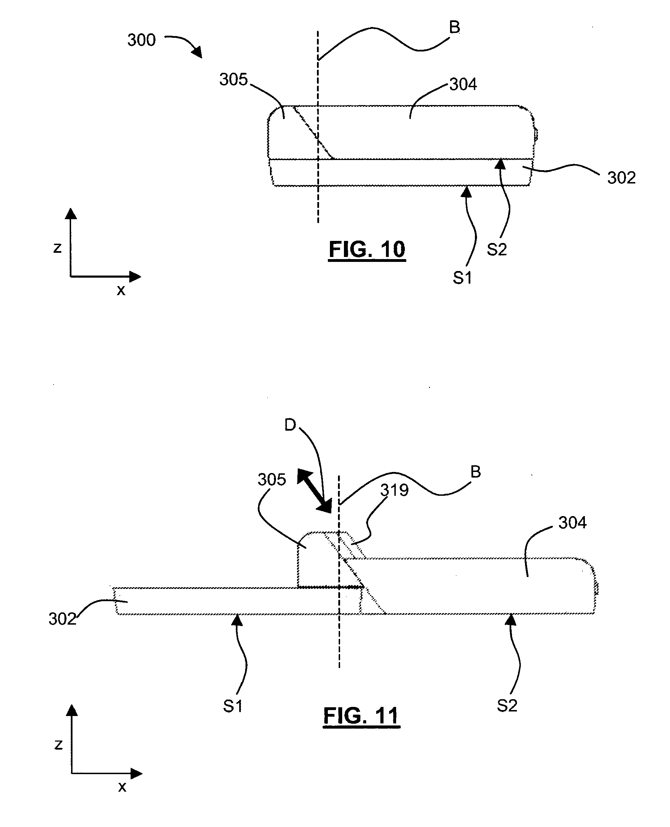

Turning now to Figures 8 to 11, illustrated generally therein is a portable electronic device 300 according to another embodiment. The portable electronic device 300 is generally similar to the portable electronic device 200 described above. In particular, the portable electronic device 300 includes a first portion (e.g. a display portion 302), a second portion (e.g. a keypad portion 304), and a third portion (e.g. a slide portion 305) that is coupled to both the display portion 302 and keypad portion 304 so that the display portion 302 can move between a closed position wherein the display portion 302 covers at least a portion of the keypad portion 304 (as shown in Figures 8 and 10), and an open position (as shown in Figures 9 and 11) wherein the keypad portion 304 is at least partially exposed and the surfaces S1, S2 of the display portion 302 and keypad portion 304 are aligned. In some embodiments, a display 306 may be a touch screen display and the keypad portion 304 may include input devices 312 and a keypad 320 with a plurality of keys.

However, in this embodiment the display portion 302 is adapted to rotate about a rotation axis B selected so that the display portion 302 is generally aligned with a transverse axis S of the portable electronic device 300. After rotating the display portion 302 into the rotated position, the display portion 302 can then be moved in a slide direction D (e.g. using a slide mechanism 319) so that the surfaces of the display portion 302 and keypad portion 304 can be aligned.

Accordingly, this portable electronic device 300 may be operated with the keypad 320 and display 306 in a "landscape" mode when in the open position (as opposed to the portable electronic device 200 which operates in a "portrait" mode when open).

At least some of the embodiments as described herein may provide one or more benefits. For example, by aligning the "active" surfaces S1 and S2 when the portable electronic device 200 is open, user interaction with the portable electronic device 200 may be improved. In particular, a user may be able to transition from engaging the first surface S1 (e.g. touching a touch screen display 206 using a finger), to performing engaging the second surface S2 (e.g. the input devices 212 or keypad 220) generally without encountering discontinuities, such as a lip or stepped portion. Furthermore, when the portable electronic device 200 is in the closed position, the keypad 220 may be covered by the display portion 202. This can protect the keypad 220 when not in use, and may also inhibit keys from being pressed unintentionally when a user is carrying the portable electronic device 200 for example.

In some other embodiments, there is provided a portable electronic device that can rotate to provide the display portion in both the longitudinal and transverse directions, so that the device can be selectively operated in either a landscape mode or portrait mode as desired.

While reference has been made herein to portable electronic devices wherein a first portion is a display portion, a second portion is a keypad portion, and a third portion is a slide portion, this is not meant to be limiting and other configurations are possible. For example, the first portion and second portion may both be touchscreen portions with no keypad. In other examples, the first portion may have a keypad and the second portion may include a display.

While the above description provides examples of one or more processes or apparatuses, it will be appreciated that other processes or apparatuses may be within the scope of the accompanying claims.

## Claims

1. A portable electronic device (200, 300), comprising:
a first portion (202) having a first surface (S1);
a second portion (204) having a second surface (S2); and
a slide portion (205) rotatably coupled to the first portion (202) and slidably coupled to the second portion (204);
wherein the first portion (202), second portion (204) and slide portion (205) are adapted so that the first portion (202) is rotatable about an axis of rotation (A) between a closed position wherein the first portion (202) at least partially covers the second surface (S2), and a rotated position (202d) wherein the second surface (S2) is at least partially exposed, and wherein, when the first portion (202) is in the rotated position (202d), the first portion (202) and slide portion (205) are adapted to slide relative to the second portion (204) along a slide direction (D) having a component extending along a direction normal to the first surface (S1) to an open position in which the first surface (S1) and second surface (S2) are aligned.

2. The portable electronic device (200) of claim 1, wherein the first portion (202) is a display portion and comprises a display (206).

3. The portable electronic device (200) of claim 1 or claim 2, wherein the second portion (204) is a keypad portion and comprises a keypad (220).

4. The portable electronic device (200) of any preceding claim, wherein, in the rotated position (202d) the first portion (202) is aligned with a longitudinal axis (L) of the portable electronic device (200).

5. The portable electronic device (300) of any one of claims 1 to 3, wherein, in the rotated position (202d) the first portion is aligned with a transverse axis (S) of the portable electronic device (200).

6. The portable electronic device (200) of any preceding claim, wherein the slide direction (D) has a component aligned with a longitudinal axis (L) of the portable electronic device (200).

7. The portable electronic device (200) of any preceding claim, wherein the slide direction (D) is inclined with respect to the axis of rotation (A) of the first portion (202) by a slide angle (φ).

8. The portable electronic device (200) of claim 7, wherein the slide angle (φ) is between 15 and 75 degrees.

9. The portable electronic device (200) of claim 7, wherein the slide angle (φ) is between 30 and 60 degrees.

10. The portable electronic device (200) of any preceding claim, wherein the second portion (204) and slide portion (205) are slidably coupled together using a slide mechanism (219).

11. The portable electronic device (200) of any preceding claim, further comprising at least one biasing member for biasing the portable electronic device (200) to at least one of the closed position, the rotated position (202d), and the open position.

12. The portable electronic device (200) of claim 11, wherein the at least one biasing member includes a spring (221).

13. The portable electronic device (200) of any preceding claim, further comprising at least one locking device (215a, 215b) for retaining the portable electronic device (200) in at least one of the closed position, the rotated position (202d), and the open position.

14. The portable electronic device (200) of any preceding claim wherein a top end (202b) of the first portion comprises a recessed portion (209) adapted to facilitate clearance of the first portion (202) past the second portion (204) when the device is in the rotated position (202d).

15. A method of opening a portable electronic device (200, 300), comprising:
providing a first portion (202) having a first surface (S1), a second portion (204) having a second surface (S2), and a slide portion (205) rotatably coupled to the first portion (202) and slidably coupled to the second portion (204);
rotating the first portion (202) about an axis of rotation (A) between a closed position wherein the first portion (202) at least partially covers the second surface (S2) and a rotated position (202d) wherein the second surface (S2) is at least partially exposed; and
when the first portion (202) is in the rotated position (202d), sliding the first portion (202) and slide portion (205) relative to the second portion (204) along a slide direction (D) having a component extending along a direction normal to the first surface (S1) to an open position in which the first surface (S1) and second surface (S2) are aligned.

## Patentansprüche

1. Tragbare elektronische Vorrichtung (200, 300) mit:
einem ersten Teil (202), der eine erste Oberfläche (S1) aufweist,
einem zweiten Teil (204), der eine zweite Oberfläche (S2) aufweist, und
einem Schiebeteil (205), der mit dem ersten Teil (202) drehbar und mit dem zweiten Teil (204) verschiebbar gekoppelt ist,
wobei der erste Teil (202), der zweite Teil (204) und der Schiebeteil (205) so ausgelegt sind, dass der erste Teil (202) um eine Rotationsachse (A) zwischen einer geschossenen Stellung, wobei der erste Teil (202) zumindest teilweise die zweite Oberfläche (S2) bedeckt, und einer gedrehten Stellung (202d), wobei die zweite Oberfläche (S2) zumindest teilweise exponiert ist, drehbar ist, und, wenn der erste Teil (202) in der gedrehten Stellung (202d) ist, der erste Teil (202) und der Schiebeteil (205) dazu ausgelegt sind, bezüglich des zweiten Teils (204) entlang einer Gleitrichtung (D), die eine Komponente aufweist, die sich entlang einer Richtung normal zur ersten Oberfläche (S1) erstreckt, in eine offene Stellung zu gleiten, in der die erste Oberfläche (S1) und die zweite Oberfläche (S2) ausgerichtet sind.

2. Tragbare elektronische Vorrichtung (200) nach Anspruch 1, wobei der erste Teil (202) ein Bildschirmteil ist und einen Bildschirm (206) aufweist.

3. Tragbare elektronische Vorrichtung (200) nach Anspruch 1 oder 2, wobei der zweite Teil (204) ein Tastaturabschnitt ist und eine Tastatur (220) aufweist.

4. Tragbare elektronische Vorrichtung (200) nach einem der vorhergehenden Ansprüche, wobei in der gedrehten Stellung (202d) der erste Teil (202) an einer Längsachse (L) der tragbaren elektronischen Vorrichtung (200) ausgerichtet ist.

5. Tragbare elektronische Vorrichtung (300) nach einem der Ansprüche 1 bis 3, wobei in der gedrehten Stellung (202d) der erste Teil an einer Querachse (S) der tragbaren elektronischen Vorrichtung (200) ausgerichtet ist.

6. Tragbare elektronische Vorrichtung (200) nach einem der vorhergehenden Ansprüche, wobei die Gleitrichtung (D) eine Komponente aufweist, die an einer Längsachse (L) der tragbaren elektronischen Vorrichtung (200) ausgerichtet ist.

7. Tragbare elektronische Vorrichtung (200) nach einem der vorhergehenden Ansprüche, wobei die Gleitrichtung (D) bezüglich der Rotationsachse (A) des ersten Teils (202) um einen Gleitwinkel (φ) geneigt ist.

8. Tragbare elektronische Vorrichtung (200) nach Anspruch 7, wobei der Gleitwinkel (φ) zwischen 15 und 75° liegt.

9. Tragbare elektronische Vorrichtung (200) nach Anspruch 7, wobei der Gleitwinkel (φ) zwischen 30 und 60° liegt.

10. Tragbare elektronische Vorrichtung (200) nach einem der vorhergehenden Ansprüche, wobei der zweite Teil (204) und der Schiebeteil (205) unter Verwendung eines Schiebemechanismus (219) verschiebbar miteinander gekoppelt sind.

11. Tragbare elektronische Vorrichtung (200) nach einem der vorhergehenden Ansprüche, ferner mit mindestens einem Vorspannelement zum Vorspannen der tragbaren elektronischen Vorrichtung (200) auf mindestens eine aus der geschlossenen Stellung, der gedrehten Stellung (202d) und der offenen Stellung.

12. Tragbare elektronische Vorrichtung (200) nach Anspruch 11, wobei das mindestens eine Vorspannelement eine Feder (221) aufweist.

13. Tragbare elektronische Vorrichtung (200) nach einem der vorhergehenden Ansprüche, ferner mit mindestens einer Verschlussvorrichtung (215a, 215b) zum Festhalten der tragbaren elektronischen Vorrichtung (200) in mindestens einer aus der geschlossenen Stellung, der gedrehten Stellung (202d) und der offenen Stellung.

14. Tragbare elektronische Vorrichtung (200) nach einem der vorhergehenden Ansprüche, wobei ein obere Ende (202b) des ersten Teils einen ausgesparten Teil (209) aufweist, der dazu ausgelegt ist, einen Freiraum des ersten Teils (202) nach dem zweiten Teil (204) bereitzustellen, wenn die Vorrichtung in der gedrehten Stellung (202d) ist.

15. Verfahren zum Öffnen einer tragbaren elektronischen Vorrichtung (200, 300) mit:
Bereitstellen eines ersten Teils (202) mit einer ersten Oberfläche (S1), eines zweiten Teils (204) mit einer zweite Oberfläche (S2) und einem Schiebeteil (205), der mit dem ersten Teil (202) drehbar und mit dem zweiten Teil (204) verschiebbar gekoppelt ist,
Drehen des ersten Teils (202) um eine Rotationsachse (A) zwischen einer geschlossenen Stellung, wobei der erste Teil (202) zumindest teilweise die zweite Oberfläche (S2) bedeckt, und einer gedrehten Stellung (202d), wobei die zweite Oberfläche (S2) zumindest teilweise exponiert ist, und,
Schieben des ersten Teils (202) und des Schiebeteils (205), wenn der erste Teil (202) in der gedrehten Stellung (202d) ist, bezüglich der zweiten Stellung (204) entlang einer Gleitrichtung (D), die eine Komponente aufweist, die sich entlang einer Richtung normal zur ersten Oberfläche (S1) erstreckt, in eine offenen Stellung, in der die erste Oberfläche (S1) und die zweite Oberfläche (S2) ausgerichtet sind.

## Revendications

1. Dispositif électronique portable (200, 300), comprenant :
une première partie (202) ayant une première surface (S1) ;
une deuxième partie (204) ayant une deuxième surface (S2) ; et
une partie coulissante (205) accouplée en rotation à la première partie (202) et accouplée de manière coulissante à la deuxième partie (204) ;
dans lequel la première partie (202), la deuxième partie (204) et la partie coulissante (205) sont conçues de sorte que la première partie (202) puisse tourner autour d'un axe de rotation (A) entre une position fermée, dans laquelle la première partie (202) recouvre au moins partiellement la deuxième surface (S2), et une position tournée (202d), dans laquelle la deuxième surface (S2) est au moins partiellement exposée, et dans lequel, lorsque la première partie (202) est dans la position tournée (202d), la première partie (202) et la partie coulissante (205) sont conçues pour coulisser par rapport à la deuxième partie (204) le long d'une direction de coulissement (D) ayant une composante s'étendant le long d'une direction normale à la première surface (S1) vers une position ouverte dans laquelle la première surface (S1) et la deuxième surface (S2) sont alignées.

2. Dispositif électronique portable (200) selon la revendication 1, dans lequel la première partie (202) est une partie d'affichage et comprend un afficheur (206).

3. Dispositif électronique portable (200) selon la revendication 1 ou la revendication 2, dans lequel la deuxième partie (204) est une partie de pavé numérique et comprend un pavé numérique (220).

4. Dispositif électronique portable (200) selon l'une quelconque des revendications précédentes, dans lequel, dans la position tournée (202d), la première partie (202) est alignée avec un axe longitudinal (L) du dispositif électronique portable (200).

5. Dispositif électronique portable (300) selon l'une quelconque des revendications 1 à 3, dans lequel, dans la position tournée (202d), la première partie est alignée avec un axe transversal (S) du dispositif électronique portable (200).

6. Dispositif électronique portable (200) selon l'une quelconque des revendications précédentes, dans lequel la direction de coulissement (D) a une composante alignée avec un axe longitudinal (L) du dispositif électronique portable (200).

7. Dispositif électronique portable (200) selon l'une quelconque des revendications précédentes, dans lequel la direction de coulissement (D) est inclinée par rapport à l'axe de rotation (A) de la première partie (202) selon un angle de coulissement (φ).

8. Dispositif électronique portable (200) selon la revendication 7, dans lequel l'angle de coulissement (φ) est entre 15 et 75 degrés.

9. Dispositif électronique portable (200) selon la revendication 7, dans lequel l'angle de coulissement (φ) est entre 30 et 60 degrés.

10. Dispositif électronique portable (200) selon l'une quelconque des revendications précédentes, dans lequel la deuxième partie (204) et la partie coulissante (205) sont accouplées de manière coulissante l'une à l'autre en utilisant un mécanisme de coulissement (219).

11. Dispositif électronique portable (200) selon l'une quelconque des revendications précédentes, comprenant en outre au moins un élément de sollicitation pour solliciter le dispositif électronique portable (200) vers au moins l'une de la position fermée, de la position tournée (202d) et de la position ouverte.

12. Dispositif électronique portable (200) selon la revendication 11, dans lequel ledit au moins un élément de sollicitation comprend un ressort (221).

13. Dispositif électronique portable (200) selon l'une quelconque des revendications précédentes, comprenant en outre au moins un dispositif de blocage (215a, 215b) pour maintenir le dispositif électronique portable (200) dans au moins l'une de la position fermée, de la position tournée (202d) et de la position ouverte.

14. Dispositif électronique portable (200) selon l'une quelconque des revendications précédentes, dans lequel une extrémité supérieure (202b) de la première partie comprend une partie en retrait (209) conçue pour faciliter le dégagement de la première partie (202) au-delà de la deuxième partie (204) lorsque le dispositif est dans la position tournée (202d).

15. Procédé d'ouverture d'un dispositif électronique portable (200, 300), comprenant :
la fourniture d'une première partie (202) ayant une première surface (S1), d'une deuxième partie (204) ayant une deuxième surface (S2), et d'une partie coulissante (205) accouplée en rotation à la première partie (202) et accouplée de manière coulissante à la deuxième partie (204) ;
la rotation de la première partie (202) autour d'un axe de rotation (A) entre une position fermée, dans laquelle la première partie (202) recouvre au moins partiellement la deuxième surface (S2), et une position tournée (202d), dans laquelle la deuxième surface (S2) est au moins partiellement exposée ; et
lorsque la première partie (202) est dans la position tournée (202d), le coulissement de la première partie (202) et de la partie coulissante (205) par rapport à la deuxième partie (204) le long d'une direction de coulissement (D) ayant une composante s'étendant le long d'une direction normale à la première surface (S1) vers une position ouverte dans laquelle la première surface (S1) et la deuxième surface (S2) sont alignées.
